# EUROPEAN PATENT SPECIFICATION

(11) **EP 3 272 581 B1**
(45) Date of publication and mention of the grant of the patent: **12.02.2020**
(21) Application number: 16180613.8
(22) Date of filing: 21.07.2016
(51) Int. Cl.: B60P 3/00, B60P 3/20

(54) **METHOD AND TRANSPORT VEHICLE FOR DISTRIBUTING GOODS TO FINAL CUSTOMERS**
VERFAHREN UND TRANSPORTFAHRZEUG ZUR VERTEILUNG VON GÜTER ZU ENDKUNDEN
PROCÉDÉ ET VÉHICULE DE TRANSPORT PERMETTANT DE DISTRIBUER DES MARCHANDISES AUX CLIENTS FINAUX

(43) Date of publication of application: 24.01.2018
(73) Proprietor: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Inventor: Lürken, Franz, 47906 Kempen (DE)
(74) Representative: KNH Patentanwälte Neumann Heine Taruttis PartG mbB

(56) References cited:
- WO-A1-2012/126711
- DE-U1-202014 103 652
- US-A1- 2015 013 369

## Description

The present invention is directed to a method and a transport vehicle for distributing products, in particular food products, to final customers. Document DE 20 2014 103 652 U1 is considered to be the prior art closest to the subject-matter of independent claims 1 and 10.

Various transport vehicles are known for various purposes, including, in particular, for distributing goods to final customers. Known transport vehicles have the disadvantage that unloading goods designated to one respective final customer can be time consuming. In particular, with increasing density of customers, that is with decreasing distance between two subsequently served customers, the time for unloading the respective goods dominates the efficiency of the overall delivery process. Further, with increasing density of customers, a heat intake due to opening doors of the transport vehicle for unloading products can increase. In particular, the ratio of the time that doors are closed and opened can be disadvantageously shifted towards the time that doors are opened if the customer density is high. That is, a higher cooling power is required for the same cooling effect. This consumes more energy and/or refrigerant. Further, delivering goods, in particular food products, to final customers requires a simultaneous treatment of products having different temperature requirements. Final customers want to receive one single package comprising all grocery products they have ordered. With known transport vehicles that can only provide one temperature, only products of one type can be delivered at the same time. That is, a multitude of transport vehicles has to be used and the final customer hence receives a multitude of packages.

It is, therefore, an object of the present invention to overcome at least in part the disadvantages known from prior art and in particular to provide a method and a transport vehicle for distributing products, in particular food products, to final customers in an energy and/or refrigerant saving way. In particular, it is an object of the present invention to improve the thermal isolation of the products within the transport vehicle from the environment.

These objects are solved by the features of the independent claims. Dependent claims are directed to preferred embodiments of the present invention.

For the method for distributing products to final customers with a transport vehicle and for thermally isolating the products from the environment a transport vehicle is used that comprises at least:
- a driver and airlock cabin with at least a first external door located on a passenger side,
- a first cargo space, which has a temperature being controlled to be in a first temperature range, and which is arranged adjacent to the driver and airlock cabin, to which it is connected by a first internal door,
- a second cargo space, which has a temperature being controlled to be in a second temperature range, and which is arranged adjacent to the first cargo space, to which it is connected by a second internal door, wherein the second cargo space comprises a second external door, and
- at least one cooling chamber that is located within the first cargo space and that comprises a cooling chamber separator,
wherein the method comprises at least the following steps:
a) loading the products into the transport vehicle,
b) transporting the products with the transport vehicle to at least one of the final customers, and
c) unloading those products from the transport vehicle that are designated to the respective one of the final customers,
wherein the driver and airlock cabin is used as an airlock between the first cargo space and the environment of the transport vehicle, and wherein the first cargo space is used as an airlock between the at least one cooling chamber and the driver and airlock cabin.

The products are preferably food products or other products commonly available from a grocery store. The products are supposed to be delivered to a plurality of final customers. Thereby, the delivery is preferably directed to the homes of the final customers after the same have, for example, ordered the products online or via telephone. Such a distribution is known as "e-commerce". The products are preferably distributed from a supply center, where they are loaded into the transport vehicle. The products may be grouped into heat-sensitive products, which are preferably stored within the at least one cooling chamber; non-heat-sensitive products of a first type, which are preferably stored within the first cargo space; and non-heat-sensitive products of a second type, which are preferably stored within the second cargo space. Preferably, the non-heat-sensitive products of the first type comprise fresh grocery products that are stored in boxes, and the non-heat-sensitive products of the second type comprise beverage crates. Storing the products in boxes can facilitate the loading process, in particular if all boxes or at least a group of the boxes have the same shape and size and/or stackable. Therein, it is preferred that the size of the boxes is adapted to the size of the transport vehicle. In particular, this means that it is preferred that the boxes can be stored densely.

The transport vehicle can be a truck, a van or a similar motorized vehicle. Preferably, the transport vehicle is adapted to being driven in urban areas. That is, the size and other properties such as a turning circle are preferably chosen appropriately. Further, it is preferred that the transport vehicle can be operated energy efficiently, even if its engine has to be restarted frequently. That is, in particular, it is preferred that the transport vehicle is powered at least in part by at least one electric engine. Alternatively or commutatively, it is preferred that the transport vehicle has an internal combustion engine.

The passenger side is defined to be the side of the transport vehicle opposite to the side where a driver's seat is commonly situated. That is, in countries with right-hand traffic, the passenger side is the right side of the transport vehicle in the direction of travel. Having the first external door located on the passenger side can enable the driver to leave the driver and airlock cabin on that side of the transport vehicle that is usually not exposed to traffic overtaking the transport vehicle while being parked on the side of a street, for example while serving a final customer. In most such cases, other vehicles overtake the parked transport vehicle on the driver's side. Leaving the driver and airlock cabin via a door located on the driver's side of the transport vehicle could hence be dangerous. It is preferred, that the driver can leave the driver and airlock cabin via the external door easily. That is, in particular, it is preferred that neither a passenger seat nor a central console prevents the driver from leaving the driver and airlock cabin via the first external door.

Preferably, the first external door and the first internal door can be provided as parts of a revolving door which ensures a simultaneous movement of both doors and which in particular ensures that the first internal door is closed if the first external doors is fully open and, therefore, usable for the driver for leaving the transport vehicle.

Next to the first external door, optionally instead of a passenger seat, a sack barrow is preferably stowed. The sack barrow hence does not have to be kept in one of the cargo spaces. Instead, it is easily accessible. This can decrease the time for unloading.

The first cargo space preferably has a cuboid shape. Thermal isolation means such as isolation plates are preferably arranged between the first cargo space and its environment. The first cargo space is preferably arranged behind the driver and airlock cabin in the direction of travel of the transport vehicle. Thereby, the driver and airlock cabin can be seen as a thermal isolation between the first cargo space and the environment. In particular, the driver and airlock cabin can be seen as an airlock, reducing exchange of air between the first cargo space and the environment. In the context of this document, an airlock is to be understood as a space, which is preferably, but not necessarily strictly, closed to all sides so that no gas, in particular air, can enter or leave the space, and which is situated between two other spaces, between which it hence isolates thermally. However, an airlock as defined here can have, in particular temporarily, minor openings. For example, the driver and airlock cabin can comprise windows and/or doors that can be opened by the driver for entering or leaving the driver and airlock cabin and/or for airing the driver and airlock cabin. The smaller these openings are and the shorter they are open, the more pronounced the functionality of the airlock is.

The driver and airlock cabin being realized as an airlock can be advantageous, in particular if the driver and airlock cabin has a temperature which is maintained by an air conditioning of the transport vehicle. That is, for example, cold air in winter and warm air in summer is prevented from accessing the first cargo space directly. Further, it is preferred that the driver can access the first cargo space via the first internal door easily. That is, similar to what has been described for the first external door, it is preferred that neither a central console nor a passenger seat prevents the driver from accessing the first cargo space. That is, the first cargo space can be accessed easily from the street via the first external door and via the first internal door. The first internal door is preferably a sliding door. This can save space. Alternatively, it is preferred that the first internal door is a roller door, a curtain or simply an open doorway. It is preferred that the first internal door is at least in part transparent. That way, the driver can easily check the cargo, in particular the cargo securing.

The first temperature range is preferably adapted to the products that are supposed to be stored in the first cargo space. In particular, it is preferred that the first temperature range is adapted to temperature requirements of the non-heat-sensitive products of the first type. The non-heat-sensitive products of the first type can be, for example, vegetables, salad or other fresh food products. Although these do not require an intense cooling, these products still are preferably not exposed to temperatures significantly above 20 °C [degrees Celsius]. This is particularly relevant in summer, when temperatures in vehicles can be too high for the aforementioned products. Further, the non-heat-sensitive products of the first type are preferably prevented from freezing, as this might cause damages. Hence, the first temperature range is preferably from 5 °C and 20 °C, in particular from 10 °C to 15 °C. The transport vehicle preferably comprises means for cooling and/or heating the first cargo space accordingly. It is preferred that the temperature in the first cargo space is maintained automatically. Therefore, a software controlled air conditioning system is preferably used. Alternatively, the means for cooling and/or heating may be adjusted manually. The means for heating the first cargo space preferably utilizes heat of an internal combustion engine of the transport vehicle and the means for cooling preferably utilizes mechanical energy of the internal combustion engine. The latter can be obtained by way of known air conditioning systems for vehicles. Alternatively, it is preferred that the means for cooling and/or heating are powered electrically.

In particular, the first temperature range can be chosen to be above 5 °C, only ensuring that the non-heat-sensitive products of the first type are prevented from freezing. This can facilitate maintaining the temperature in the first cargo space in the first temperature range because only the means for heating of the first cargo space are required.

Further, the at least one cooling chamber is located within the first cargo space. As the at least one cooling chamber can be expected to have a thermal isolation with a certain amount of thermal losses, the first cargo space is cooled at least in part by these thermal losses of the at least one cooling chamber. This can reduce a required cooling of the first cargo space. Potentially, depending on the circumstances such as the climate in which the transport vehicle is to be used, no cooling of the first cargo space may be necessary at all. In that case, no separate cooling means for the first cargo space are required. Additionally, the first cargo space is an airlock between the at least one cooling chamber and the environment, potentially reducing the required cooling power for the at least one cooling chamber. It is preferred that the cooling chamber separator opens towards the first cargo space, that is that there is no connection between the at least one cooling chamber and the environment of the transport vehicle. This can enhance the thermal isolation of the at least one cooling chamber from the environment, which may save energy.

The second cargo space preferably has a cuboid shape. Thermal isolation means are preferably arranged between the second cargo space and its environment. The second cargo space is preferably arranged behind the first cargo space in the usual direction of travel of the transport vehicle. Similar to what has been described for the first temperature range in the first cargo space, the second temperature range in the second cargo space is preferably adapted to the heat-sensitive products of the second type. The non-heat-sensitive products of the second type can be any products that do not require a particular cooling. In particular, the non-heat-sensitive products of the second type are preferably no fresh food products. For example, the non-heat-sensitive products of the second type may include beverages or other food products with non-critical temperature requirements. Additionally, the non-heat-sensitive products of the second type can comprise non-food products. However, the non-heat-sensitive products of the second type are preferably prevented from freezing. Accordingly, the second temperature range is preferably from 0 °C to 25 °C, in particular from 5 °C to 20 °C. The transport vehicle preferably comprises means for cooling and/or heating the second cargo space accordingly. The means for cooling and/or heating the second cargo space are preferably the same as or similar to the means for cooling and/or heating the first cargo space. Similar to the first temperature range, the second temperature range can only be defined by a minimum temperature. It is preferred that the first temperature range and the second temperature range are different.

The first cargo space and the second cargo space are connected by the second internal door. Therefore, preferably, the driver can access the second cargo space via the first cargo space from the driver and airlock cabin easily. Further, the second cargo space comprises a second external door. The second external door is preferably arranged on a back side of the transport vehicle. Preferably, the second external door and the second internal door are sufficiently large to allow the products to be loaded into the transport vehicle. That is, it is particularly preferred that the second internal door and the second external door cover almost completely, in particular at least by 90 %, a separating wall between the first cargo space and the second cargo space, and a back wall of the transport vehicle, respectively.

The second internal door is preferably a sliding door to save space. Alternatively, it is preferred that the second internal door is a roller door, a curtain or simply an open doorway. The second external door is preferably a roller door.

It is preferred that there are two of the at least one cooling chambers arranged within the first cargo space. Alternatively, it is preferred that there are three or four of the at least one cooling chambers. Each of the cooling chambers preferably is held at a temperature in a respective predetermined temperature range. Thereby, it is preferred that the respective temperature ranges are adapted to the respective temperature requirements of the heat-sensitive products that are supposed to be loaded into the cooling chambers. The cooling chamber separator is preferably realized as a roller door or blind. This can save space. Preferably, the at least one cooling chamber is thermally isolated from its environment. In particular, it is preferred that the cooling chamber separator comprises thermal isolation means.

Steps a) to c) of the method are preferably performed in the given order.

In step a) the products are preferably loaded into the transport vehicle through the second external door. Thereby, the second internal door and the second external door are preferably open while the first internal door can remain closed. The latter may facilitate maintaining the temperature in the first cargo space. All products that are supposed to be loaded into the first cargo space, that is preferably the non-heat-sensitive products of the first type, can be loaded via the large doors at the back of the transport vehicle. This can, for example, be performed from a loading ramp. Loading of the transport vehicle is preferably performed at a supply center. Thereby, the preferably large second internal door and second external door may allow for the usage of a fork lift for loading the products into the first cargo space. Additionally, the heat-sensitive products are preferably loaded into the at least one cooling chamber, which is comprised within the first cargo space. It is preferred that heat-sensitive products with different temperature requirements are loaded into different cooling chambers with respective different temperature ranges. Once the first cargo space and the therein comprised cooling chambers are fully loaded, the first internal door can be closed.

Subsequently, the non-heat-sensitive products of the second type are preferably loaded into the second cargo space via the second external door. Thereby, as already described above, the preferably large second external door allows for the usage of a fork lift. Once the second cargo space is fully loaded, the second external door can be closed as well.

In step b) the driver preferably drives the transport vehicle to the place of the respective final customer. There, the driver preferably performs step c). In this description it is assumed that it is the driver who performs step c). Alternatively, a further person can perform step c). In step c), any doors of the transport vehicle can be used to access the first cargo space, the second cargo space and the at least one cooling chamber.

Preferably, however, step c) comprises unloading the heat-sensitive products and the non-heat-sensitive products of the first type through the first external door on the passenger side, and unloading the non-heat-sensitive products of the second type through the second external door.

The driver can access the first cargo space via the first internal door and collect the non-heat-sensitive products of the first type and the heat-sensitive products that are designated to the respective final customer. Then, the driver can leave the first cargo space via the first internal door and the first external door. As the first external door is arranged on the passenger side of the transport vehicle, the driver does not have to exit the transport vehicle on the side that faces traffic such as overtaking cars. The latter could be dangerous. Additionally, the driver can take the non-heat-sensitive products of the second type out of the second cargo space via the second external door. This is advantageous because the non-heat-sensitive products of the second type are likely to comprise heavy goods such as beverage crates.

Steps b) and c) are preferably performed alternatingly. Once the last customer has been served, the transport vehicle can return to the supply center.

The fact that the first cargo space cannot be accessed from the environment of the transport vehicle can enhance the thermal isolation of the first cargo space from the environment. In steps b) and c) the second internal door preferably remains closed, while the driver only uses the first internal door to access the first cargo space. Depending on the weather, particularly warm or cold air from the environment of the transport vehicle can only enter the first cargo space through the driver and airlock cabin. Hence, the driver and airlock cabin can be used to enhance the thermal isolation of the first cargo space. The same is true for the at least one cooling chamber, which is arranged within the first cargo space. Warm air from the environment of the transport vehicle can only enter the at least one cooling chamber via the driver and airlock cabin and the first cargo space. It is important to note that such an airlock is a very efficient means for thermal isolation. In particular, avoiding a flow of warm or cold air into the first cargo space and/or into the at least one cooling chamber, respectively, is very efficient in this respect.

In a further preferred embodiment of the method the driver and airlock cabin has a temperature, which is controlled to be in a third temperature range.

Preferably, the third temperature range is different from the first temperature range and/or from the second temperature range. In particular, the third temperature range is adapted to ensure the comfort of the driver. Accordingly, the third temperature range is preferably from 15 °C to 28 °C, in particular from 18 °C to 24 °C. However, the driver's comfort is not the only advantage of having the temperature of the driver and airlock cabin controlled as described. Moreover, the functionality of the driver and airlock cabin as an airlock between the first cargo space and the environment of the transport vehicle can be enhanced by cooling or warming the driver and airlock cabin. It is particularly preferred that the temperature of the driver and airlock cabin is controlled by an air conditioning system of the transport vehicle.

In a further preferred embodiment the method further comprises the step of ensuring that only the first external door or the first internal door is open at the same time to ensure the functionality of the driver and airlock cabin as an airlock between the first cargo space and the environment of the transport vehicle.

In this embodiment, warm or cold air from the environment of the transport vehicle cannot enter the first cargo space directly, which can particularly enhance the thermal isolation of the first cargo space from the environment. It is preferred that it is impossible to open the first internal door while the first external door is open, or vice versa, in particular using a respective control to control the function of the first internal door and the first external door. Alternatively, it is only preferred that it is impossible to open the first internal door while the first external door is open, while for security reasons the first external door can be opened at all times. An automatic door lock can be used to prevent to open the respective door that is supposed to remain closed. Also, the driver can simply refrain from opening a door that is supposed to remain closed. Further, it is preferred that all doors can be opened in an emergency situation and/or for loading the products in step a) of the method. Both may be realized with respective control using buttons and/or similar means.

In a further preferred embodiment the method further comprises the step of ensuring that only the first internal door or the cooling chamber separator of one or more of the at least one cooling chambers is/are open at the same time to ensure the functionality of the first cargo space as an airlock between the at least one cooling chamber and the driver and airlock cabin.

Here, the same applies as for the previously discussed preferred embodiment. Hence, it is referred to the above discussion, in particular with respect to how a door may be prevented from being opened. It is particularly preferred that the cooling chamber separator of none of the at least one cooling chamber can be opened while the first internal door is open. Also, it is preferred that the cooling chamber separator of none of the at least one cooling chamber can be opened while the second internal door is open, which, however is less relevant as in steps b) and c) of the method the second internal door is supposed to remain closed at all times. However, if the first internal door and the second internal door are both closed, the cooling chamber separator of more than one of the cooling chambers preferably can be open at the same time. That is, in particular, the cooling chamber separator of one cooling chamber being open preferably does not prevent the cooling chamber separator of another cooling chamber from being opened. This is possible as the airlock functionality is not affected.

In a further preferred embodiment of the method the first temperature range is different from the second temperature range, wherein the temperature ranges are adapted to the temperature requirements of the heat-sensitive products.

In a further preferred embodiment of the method at least a part of the heat-sensitive products is stored in cooling boxes with an internal cooling.

The cooling boxes preferably comprise a thermal isolation from the environment and an active means for cooling. Hence, the cooling boxes can be treated independently from external cooling means. This is particularly advantageous for storing the cooling boxes in a supply center and for the process of loading the cooling boxes into the transport vehicle. It is preferred that the active means for cooling is autarkic. That is, no external supply of a refrigerant or electrical power is required. This may be realized by cold storage elements comprising a cooling material such as an eutectic material. Alternatively, it is preferred that the cooling means is powered electrically, wherein the cooling boxes are preferably connected to an external power supply at least temporarily. In this embodiment, the at least one cooling chamber does not necessarily have to be cooled externally. However, such an additional cooling is preferred. The cooling boxes preferably are configured for maintaining a temperature in a respective temperature range. Albeit having different temperatures, cooling boxes can be stored within the same cooling chamber. This can increase the flexibility of using the cooling chambers. Preferably, means for easily securing the cooling boxes are provided, e. g. as locking bolts or the like.

In a further preferred embodiment of the method at least a part of the heat-sensitive products is stored in boxes, wherein the boxes are cooled by a cooling installation of the transport vehicle.

Using boxes without any means for active cooling can reduce costs. Further, less space may be required by these boxes. Preferably, the cooling installation is based on a 12 V [volt] technology. This can be advantageous as no additional energy supply is required besides the 12 V network commonly available in vehicles. However, this may limit the power of the cooling installation. Hence, it is preferred that, supporting the cooling by the cooling installation of the transport vehicle, the heat-sensitive products are stored in actively cooled cooling boxes.

Generally, it is preferred that the isolation of at least one of the cooling chambers comprises means for cooling said cooling chamber, e. g. by providing cavities into which cooling elements like e. g. eutectic cooling elements can be inserted or by providing a cooling space in which an eutectic material is provided and which can be easily replaced e. g. by providing a channel through the isolation which can be filled with an eutectic material which can be cooled quickly, e. g. by pumping a cryoliquied through an inner pipe system using e. g. a quick coupling system.

According to a further embodiment at least one external door is automatically closed, when the distance between a locking token and the transport vehicle is increased above a predetermined threshold value.

According to a further embodiment at least one external door is automatically locked, when the distance between a locking token and the transport vehicle is increased above a predetermined threshold value.

The locking token can e. g. comprise a respective RFID (Radio Freqency IDentification) device that communicates with a respective sender in the transport vehicle which can be part of a locking and closing means which initiates the locking and/or closing action if the distance between the locking token and the vehicle exceeds the threshold value. The threshold value is preferably set to a distance in which the driver of the transport vehicle has a good overview about the transport vehicle. The locking and/or closing action allows to reduce the probability of e. g. theft and hijacking of the transport vehicle. The closing action can be initiated by starting a respective motor being capable of moving the respective external door. A similar approach can be used to open and/or unlock the respective external door if the distance of the locking token is decreased below a (the) threshold value.

According to a further embodiment the transport vehicle signals that it is in a state of unloading, when the distance between a locking token and the transport vehicle is increased above a predetermined threshold value.

This signaling process varies depending on the legal conditions under which the transport vehicle is being used. E. g. in Germany this is signaled by using the emergency flashers of the transport vehicle. This increases the safety of the transport vehicle as then automatically other traffic is warned and informed.

According to another aspect of the present invention a transport vehicle is provided for distributing products to final customers and for thermally isolating the products from the environment using a method as described, said transport vehicle being characterized by
- a driver and airlock cabin with at least a first external door located on a passenger side,
- a first cargo space, which has a temperature being controlled to be in a first temperature range, and which is arranged adjacent to the driver and airlock cabin, to which it is connected by a first internal door,
- a second cargo space, which has a temperature being controlled to be in a second temperature range, and which is arranged adjacent to the first cargo space, to which it is connected by a second internal door, wherein the second cargo space comprises a second external door, and
- at least one cooling chamber that is located within the first cargo space and that comprises a cooling chamber separator.

The details and advantages disclosed for the method according to the present invention can be applied to the transport vehicle of the present invention and vice versa.

Preferably, the transport vehicle is based on a 7.5 t [ton] chassis. It can be advantageous that the transport vehicle does not exceed 7.5 t [tons] due to various legal restrictions in some countries. For example, in numerous countries a specific driver's license could be required for heavier transport vehicles. Further, a larger and heavier transport vehicle may be less appropriate in an urban area. The load capacity of a 7.5 t chassis based transport vehicle is advantageously large and allows for a large number of final customers to be served.

It is preferred that the transport vehicle is powered at least in part by at least one electric engine. This is particularly preferred because an electric vehicle or a vehicle with a hybrid drive as well as a vehicle powered by a fuel cell is eco-friendly in particular if operated in an urban environment in a way that short distances are driven followed by frequent stops. Therein, it is preferred that the transport vehicle allows for a significant amount of batteries to be installed. In particular, the transport vehicle has to be suitable for the weight of the batteries. Preferably, sufficient battery power is provided for a cruising range that allows serving all final customers the respective products of which can be stored in the transport vehicle. Particularly for this reason, the 7.5 t chassis is preferred.

Preferably, there are two cooling chambers arranged next to each other. Having the cooling chambers arranged next to each other can facilitate the process of loading and unloading because of reduced distances the driver has to walk. This may increase the efficiency.

Two cooling chambers are preferred because usually heat-sensitive products either require a cooling to about 1 °C or a freezing, which is a cooling to about - 20 °C. Accordingly, it is preferred that the temperature in one cooling chamber is maintained within - 5 °C and 4 °C, in particular in between - 3 °C and 1 °C, and that the temperature in the other cooling chamber is maintained within - 25 °C and - 5 °C, in particular in between - 22 °C and - 18 °C.

Alternatively, it is preferred to have two cooling chambers arranged on opposite sides of the transport vehicle. This can facilitate maintaining different temperatures in the different cooling chambers. That is, depending on the configuration of the cooling chambers and in particular on the thermal isolation of these, either this embodiment or the previously described is preferred. Regarding the temperatures that are preferably maintained in the cooling chambers, the above described applies to this embodiment as well.

In a further preferred embodiment of the transport vehicle the at least one cooling chamber comprises a condensate drain.

The condensate drain is arranged for draining water, in particular water that originates from condensation on walls of the cooling chamber. Thereby, a floor of the transport vehicle, in particular of the first cargo space, can be prevented from becoming wet and, hence, slippery. Preferably, the water is drained to a tank that can be emptied at the supply center. Alternatively, it is preferred that the condensate drains to the environment of the transport vehicle. This is acceptable as the condensate is only water and hence not pollutive.

In a further preferred embodiment of the transport vehicle the cooling chamber separator of the at least one cooling chamber connects the at least one cooling chamber to the first cargo space.

In this embodiment there is preferably no direct connection between the at least one cooling chamber and the environment of the transport vehicle. That is, the cooling chamber can only be accessed from the first cargo space. Thereby, the airlock functionality of the first cargo space can enhance the thermal isolation of the at least one cooling chamber.

In a further preferred embodiment of the transport vehicle the cooling chamber separator of the at least one cooling chamber is divided into a multitude of sections for a sectional loading and/or unloading of the products.

Therein, it is preferred that not only the cooling chamber separator is divided into the sections, but also the cooling chambers themselves. The division is advantageous because for unloading products for one final customer it is not required to open the whole cooling chamber separator. This could result in heat intake into the cooling chamber, which would be energy inefficient. Further, it is preferred that one section is loaded with products for one final customer only. Alternatively, it is preferred that one section is loaded with products for a group of final customers. Therein, it is preferred that the group of final customers is chosen according to the locations of the homes of the respective final customers.

Preferably, the first external door is a sliding door. The sliding door can facilitate leaving the transport vehicle when parked in front of the location of a final customer. In contrast to a standard vehicle door, a sliding door does not require a spacing between the transport vehicle and, for example, other parked vehicles. Also, it is possible to drive the transport vehicle at least for a short distance, for example between two final customers living close to each other, without having to close the first external door. This can increase the efficiency.

In a further preferred embodiment the transport vehicle further comprises a door releasing means for allowing the opening of the first internal door only if the driver and airlock cabin is closed to the environment and/or for allowing the opening of the cooling chamber separator only if the first internal door is closed.

In this embodiment the driver and airlock cabin and/or the first cargo space can serve as an airlock particularly efficiently. The driver and airlock cabin is closed to the environment if all doors, in particular including the first external door, as well as all other openings such as windows are closed. This can be achieved by the use of door release means that prevent the respective door from being opened. This may be realized by a magnetic lock, an electric lock, or by a similar automatic door locking means. A sensor or similar device is preferably used to detect if a door is closed. Preferably, only if the door that is supposed to be closed is detected to be closed, the door release means allows to open the respective other door. The door release means preferably comprises a control unit, in which a computer with a software or an electronic circuitry can be used to both process information as to whether the doors in question are open or closed, and to control the respective door locking means. Further, it is preferred that the door releasing means comprises at least a button or similar interface for allowing all doors to be opened in an emergency and/or for loading the transport vehicle.

According to a further embodiment the transport vehicle further comprises at least one locking and closing means by which at least one of the following actions: a) closing, b) locking, c) unlocking and d) opening can be performed to at least one of the external doors.

It should be noted that the individual features specified in the claims may be combined with one another in any desired technological reasonable manner and form further embodiments of the invention. The specification, in particular in connection with the figures, explains the invention further and specifies particularly preferred embodiments of the invention. Particularly preferred variants of the invention and also the technical field will now be explained in more detail on the basis of the enclosed figures. It should be noted that the exemplary embodiments shown in the figures are not intended to restrict the invention. The figures are schematic and may not be to scale. The figures display:
- Fig. 1:: a schematic view of a transport vehicle with two cooling chambers on opposite sides of the transport vehicle,
- Fig. 2:: a transport vehicle with two cooling chambers arranged next to each other,
- Fig. 3-5:: schematic illustrations of the method for loading and unloading the transport vehicle of fig. 1,
- Fig. 6:: a schematic front view of a cooling chamber separator, and
- Fig. 7: a schematic view of a detail of a transport vehicle.

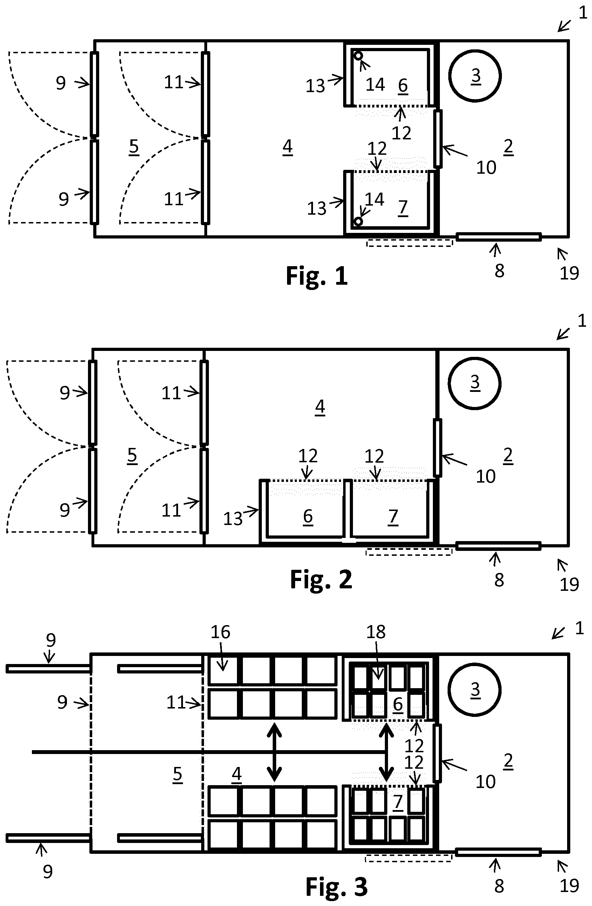

Fig. 1 shows a transport vehicle 1 having a driver and airlock cabin 2 with a driver's seat 3. Behind the driver and airlock cabin 2 there is a first cargo space 4 followed by a second cargo space 5. Within the first cargo space 4 a first cooling chamber 6 and a second cooling chamber 7 are arranged on opposite sides of the transport vehicle 1. Each cooling chamber 6, 7 can be closed by a respective cooling chamber separator 12. These cooling chamber separators 12 are preferably separators which are opened and closed in line, i. e. separators, which do not swivel out into the space between the cooling chambers 6,7. Preferably, the cooling chamber separators are curtains, in particular strip curtains or sliding curtains and/or blinds. Blinds are preferred as these allow a to secure the load behind the blind.

Each cooling chamber 6, 7 comprises an isolation 13. Further, each cooling chamber 6, 7 comprises a respective condensate drain 14. The driver and airlock cabin 2 comprises a first external door 8 and a first internal door 10. A driver can access the first cargo space 4 from the street through the first external door 8 via the driver and airlock cabin 2 through the first internal door 10. Thereby, neither a passenger seat nor a central console prevents the driver from an easy access. The (usual) direction of travel of the transport vehicle 1 in this visualization is from the left to the right. Accordingly, the passenger side 19 is on the right side. That is, the transport vehicle 1 shown here is suitable for countries with right-hand driving. For countries with left-hand driving, a different transport vehicle is preferably used that has the first external door on the left side in the direction of travel.

Additionally, a second internal door 11 is arranged between the first cargo space 4 and the second cargo space 5. A second external door 9 is arranged at a back side of the transport vehicle 1 connecting the environment of the transport vehicle 1 to the second cargo space 5.

In fig. 2 the transport vehicle of fig. 1 is shown with the only difference that the cooling chambers 6, 7 are arranged next to each other.

In fig. 3 the transport vehicle of fig. 1 is shown. Therein, a first step of the loading process is visualized. As indicated by the arrows, boxes 16 and cooling boxes 18 can be loaded into the first cargo space 4 and into the cooling chambers 6, 7, respectively. Therefore, the second external door 9 and the second internal door 11 are opened, while the first internal door 10 is closed. This enables an easy loading from the back side of the transport vehicle 1.

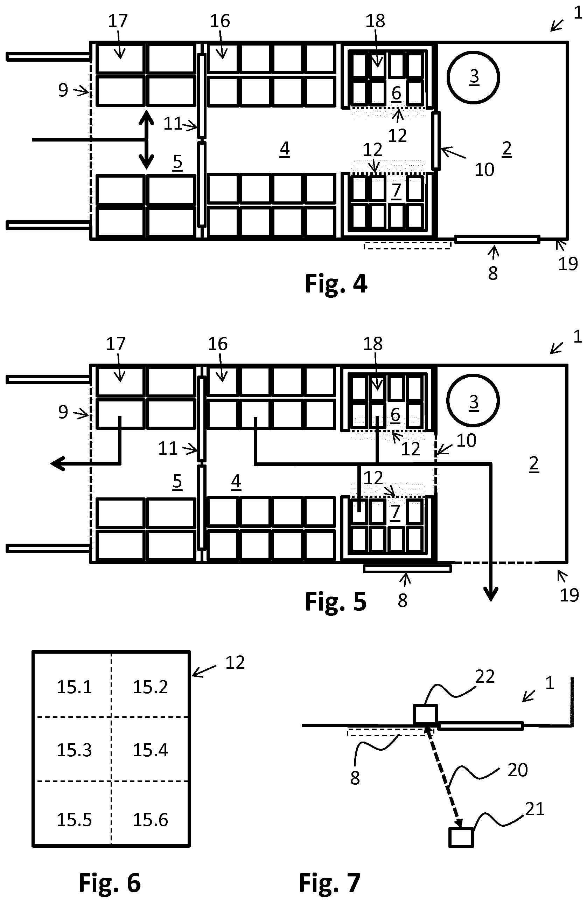

In fig. 4 a subsequent step following the one shown in fig. 3 is shown. After the first cargo space and the cooling chambers 6, 7 have been loaded, the second internal door 11 is closed. Subsequently, the second cargo space is loaded with beverage crates 17. This is done through the second external door 9.

In fig. 5 the unloading process is shown. Therefore, the first internal door 10 and the first external door 8 are opened. Via these two doors 8, 10 the driver takes the boxes 16 from the first cargo space 4 and the boxes 18 from the cooling chambers 6, 7 and leaves the transport vehicle 1 to the street. Additionally, the beverage crates 17 are unloaded via the second external door 9.

Fig. 6 shows the cooling chamber separator 12 of one of the cooling chambers of one of the previous figures. In this example, the cooling chamber separator 12 is divided into six sections 15.1 to 15.6.

Fig. 7 displays a detail of a transport vehicle 1, namely a front corner of the transport vehicle 1. The vehicle 1 comprises a locking and closing means 22 for locking and/or closing the first external door 8 which is displayed in two positions, namely the closed position (continuous line) and an open position (dashed line). The locking and closing means 22 can transfer the first external door 8 from the open position to the closed position and/or can lock the first external door 8 when being in the closed position. The locking and closing means 22 initiate the closing and/or locking process of the first external door 8, if a distance 20 between a locking token 21, which can e. g. be part of or attached to the key of the transport vehicle 1 is above a predetermined threshold value. The distance 20 can be calculated and measured with respect to a predetermined origin, which is in this example the position of the locking and closing means 22. The locking and closing means 22 can unlock and/or open the first external door 8, if the distance 20 between the locking token 21 and the vehicle 1 becomes smaller than the predetermined threshold value. A similar approach is preferred for the second external door 9. Both external doors 8, 9 can be opened any time manually from the inside for security reasons.

A method and a transport vehicle are provided for distributing products, in particular food products, to final customers in an energy efficient way.

### Reference numerals

- 1: transport vehicle
- 2: driver and airlock cabin
- 3: driver's seat
- 4: first cargo space
- 5: second cargo space
- 6: first cooling chamber
- 7: second cooling chamber
- 8: first external door
- 9: second external door
- 10: first internal door
- 11: second internal door
- 12: cooling chamber separator
- 13: isolation
- 14: condensate drain
- 15.1: first section
- 15.2: second section
- 15.3: third section
- 15.4: fourth section
- 15.5: fifth section
- 15.6: sixth section
- 16: boxes
- 17: beverage crates
- 18: cooling boxes
- 19: passenger side
- 20: distance
- 21: locking token
- 22: locking and closing means

## Claims

1. Method for distributing products to final customers with a transport vehicle (1) and for thermally isolating the products from the environment, the transport vehicle (1) comprising at least:
- a driver and airlock cabin (2) with at least a first external door (8) located on a passenger side (19),
- a first cargo space (4), which has a temperature being controlled to be in a first temperature range, and which is arranged adjacent to the driver and airlock cabin (2), to which it is connected by a first internal door (10),
- a second cargo space (5), which has a temperature being controlled to be in a second temperature range, and which is arranged adjacent to the first cargo space (4), to which it is connected by a second internal door (11), wherein the second cargo space (5) comprises a second external door (9), and
- at least one cooling chamber (6, 7) that is located within the first cargo space (4) and that comprises a cooling chamber separator (12),
wherein the method comprises at least the following steps:
a) loading the products into the transport vehicle (1),
b) transporting the products with the transport vehicle (1) to at least one of the final customers, and
c) unloading those products from the transport vehicle (1) that are designated to the respective one of the final customers,
wherein the driver and airlock cabin (2) is used as an airlock between the first cargo space (4) and the environment of the transport vehicle (1), and wherein the first cargo space (4) is used as an airlock between the at least one cooling chamber (6, 7) and the driver and airlock cabin (2).

2. Method according to claim 1, wherein the driver and airlock cabin (2) has a temperature, which is controlled to be in a third temperature range.

3. Method according to one of the preceding claims, further comprising the step of ensuring that only the first external door (8) or the first internal door (10) is open at the same time to ensure the functionality of the driver and airlock cabin (2) as an airlock between the first cargo space (4) and the environment of the transport vehicle (1).

4. Method according to one of the preceding claims, further comprising the step of ensuring that only the first internal door (10) or the cooling chamber separator (12) of one or more of the at least one cooling chambers (6, 7) is/are open at the same time to ensure the functionality of the first cargo space (4) as an airlock between the at least one cooling chamber (6, 7) and the driver and airlock cabin (2).

5. Method according to one of the preceding claims, wherein the first temperature range is different from the second temperature range, and wherein the temperature ranges are adapted to the temperature requirements of the heat-sensitive products.

6. Method according to one of the preceding claims, wherein at least a part of the heat-sensitive products is stored in cooling boxes (18) with an internal cooling.

7. Method according to one of the preceding claims, wherein at least a part of the heat-sensitive products is stored in cooling boxes (18), which are cooled by a cooling installation of the transport vehicle (1).

8. Method according to one of the preceding claims, wherein at least one external door (8, 9) is automatically closed, when the distance (20) between a locking token (21) and the transport vehicle (1) is increased above a predetermined threshold value.

9. Method according to one of the preceding claims, wherein at least one external door (8, 9) is automatically locked, when the distance (20) between a locking token (21) and the transport vehicle (1) is increased above a predetermined threshold value.

10. Transport vehicle (1) for distributing products to final customers and for thermally isolating the products from the environment using a method according to one of the preceding claims, characerized in that the transport vehicle (1) comprises:
- a driver and airlock cabin (2) with at least a first external door (8) located on a passenger side (19),
- a first cargo space (4), which has a temperature being controlled to be in a first temperature range, and which is arranged adjacent to the driver and airlock cabin (2), to which it is connected by a first internal door (10),
- a second cargo space (5), which has a temperature being controlled to be in a second temperature range, and which is arranged adjacent to the first cargo space (4), to which it is connected by a second internal door (11), wherein the second cargo space (5) comprises a second external door (9), and
- at least one cooling chamber (6, 7) that is located within the first cargo space (4) and that comprises a cooling chamber separator (12)

11. Transport vehicle (1) according to claim 10, wherein the at least one cooling chamber (6, 7) comprises a condensate drain (14).

12. Transport vehicle (1) according to one of the claims 10 to 11, wherein the cooling chamber separator (12) of the at least one cooling chamber (6, 7) connects the at least one cooling chamber (6, 7) to the first cargo space (4).

13. Transport vehicle (1) according to one of the claims 10 to 12, wherein the cooling chamber separator (12) of the at least one cooling chamber (6, 7) is divided into a multitude of sections (15.1, 15.2, 15.3, 15.4, 15.5, 15.6) for a sectional loading and/or unloading of the products.

14. Transport vehicle (1) according to one of the claims 10 to 13, further comprising a door releasing means for allowing the opening of the first internal door (10) only if the driver and airlock cabin (2) is closed to the environment and/or for allowing the opening of the cooling chamber separator (12) only if the first internal door (10) is closed.

15. Transport vehicle (1) according to one of claims 10 to 14, further comprising at least one locking and closing means (22) by which at least one of the following actions: a) closing, b) locking, c) unlocking and d) opening can be performed to at least one of the external doors (8, 9).

## Patentansprüche

1. Verfahren zum Verteilen von Produkten an Endkunden mit einem Transportfahrzeug (1) und zum thermischen Isolieren der Produkte von der Umgebung, wobei das Transportfahrzeug (1) mindestens Folgendes umfasst:
- eine Fahrer- und Luftschleusenkabine (2) mit mindestens einer ersten Außentür (8), die sich auf einer Beifahrerseite (19) befindet,
- einen ersten Laderaum (4), dessen Temperatur auf einen ersten Temperaturbereich geregelt wird und der benachbart zur Fahrer- und Luftschleusenkabine (2) angeordnet ist, mit der er durch eine erste Innentür (10) verbunden ist,
- einen zweiten Laderaum (5), dessen Temperatur auf einen zweiten Temperaturbereich geregelt wird und der benachbart zum ersten Laderaum (4) angeordnet ist, mit dem er durch eine zweite Innentür (11) verbunden ist, wobei der zweite Laderaum (5) eine zweite Außentür (9) umfasst, und
- mindestens eine Kühlkammer (6, 7), die sich innerhalb des ersten Laderaums (4) befindet und die einen Kühlkammer-Trenner (12) umfasst,
wobei das Verfahren mindestens die folgenden Schritte umfasst:
a) Laden der Produkte in das Transportfahrzeug (1),
b) Transportieren der Produkte mit dem Transportfahrzeug (1) zu mindestens einem der Endkunden und
c) Entladen derjenigen Produkte aus dem Transportfahrzeug (1), die für den jeweiligen der Endkunden bestimmt sind,
wobei die Fahrer- und Luftschleusenkabine (2) als Luftschleuse zwischen dem ersten Laderaum (4) und der Umgebung des Transportfahrzeugs (1) verwendet wird und
wobei der erste Laderaum (4) als Luftschleuse zwischen der mindestens einen Kühlkammer (6, 7) und der Fahrer- und Luftschleusenkabine (2) verwendet wird.

2. Verfahren nach Anspruch 1, wobei die Fahrer- und Luftschleusenkabine (2) eine Temperatur aufweist, die geregelt wird, um in einem dritten Temperaturbereich zu sein.

3. Verfahren nach einem der vorstehenden Ansprüche, weiter umfassend den Schritt des Sicherstellens, dass nur die erste Außentür (8) oder die erste Innentür (10) gleichzeitig geöffnet sind, um die Funktion der Fahrer- und Luftschleusenkabine (2) als Luftschleuse zwischen dem ersten Laderaum (4) und der Umgebung des Transportfahrzeugs (1) sicherzustellen.

4. Verfahren nach einem der vorstehenden Ansprüche, weiter umfassend den Schritt des Sicherstellens, dass nur die erste Innentür (10) oder der Kühlkammer-Trenner (12) einer oder mehrerer der mindestens einen Kühlkammern (6, 7) gleichzeitig geöffnet ist/sind, um die Funktion des ersten Laderaums (4) als Luftschleuse zwischen der mindestens einen Kühlkammer (6, 7) und der Fahrer- und Luftschleusenkabine (2) sicherzustellen.

5. Verfahren nach einem der vorstehenden Ansprüche, wobei sich der erste Temperaturbereich von dem zweiten Temperaturbereich unterscheidet, und wobei die Temperaturbereiche an die Temperaturanforderungen der wärmeempfindlichen Produkte angepasst sind.

6. Verfahren nach einem der vorstehenden Ansprüche, wobei mindestens ein Teil der wärmeempfindlichen Produkte in Kühlboxen (18) mit Innenkühlung gelagert wird.

7. Verfahren nach einem der vorstehenden Ansprüche, wobei mindestens ein Teil der wärmeempfindlichen Produkte in Kühlboxen (18) gelagert wird, die von einer Kühlanlage des Transportfahrzeugs (1) gekühlt werden.

8. Verfahren nach einem der vorstehenden Ansprüche, wobei mindestens eine Außentür (8, 9) automatisch geschlossen wird, wenn der Abstand (20) zwischen einem Sperr-Token (21) und dem Transportfahrzeug (1) über einen vorbestimmten Schwellenwert erhöht wird.

9. Verfahren nach einem der vorstehenden Ansprüche, wobei mindestens eine Außentür (8, 9) automatisch gesperrt wird, wenn der Abstand (20) zwischen einem Sperr-Token (21) und dem Transportfahrzeug (1) über einen vorbestimmten Schwellenwert erhöht wird.

10. Transportfahrzeug (1) zum Verteilen von Produkten an Endkunden und zum thermischen Isolieren der Produkte von der Umgebung unter Verwendung eines Verfahrens nach einem der vorstehenden Ansprüche, **dadurch gekennzeichnet, dass** das Transportfahrzeug (1) umfasst:
- eine Fahrer- und Luftschleusenkabine (2) mit mindestens einer ersten Außentür (8), die sich auf einer Beifahrerseite (19) befindet,
- einen ersten Laderaum (4), dessen Temperatur auf einen ersten Temperaturbereich geregelt wird und der benachbart zur Fahrer- und Luftschleusenkabine (2) angeordnet ist, mit der er durch eine erste Innentür (10) verbunden ist,
- einen zweiten Laderaum (5), dessen Temperatur auf einen zweiten Temperaturbereich geregelt wird und der benachbart zum ersten Laderaum (4) angeordnet ist, mit dem er durch eine zweite Innentür (11) verbunden ist, wobei der zweite Laderaum (5) eine zweite Außentür (9) umfasst, und
mindestens eine Kühlkammer (6, 7), die sich innerhalb des ersten Laderaums (4) befindet und die einen Kühlkammer-Trenner (12) umfasst.

11. Transportfahrzeug (1) nach Anspruch 10, wobei die mindestens eine Kühlkammer (6, 7) einen Kondensatabfluss (14) umfasst.

12. Transportfahrzeug (1) nach einem der Ansprüche 10 bis 11, wobei der Kühlkammer-Trenner (12) der mindestens einen Kühlkammer (6, 7) die mindestens eine Kühlkammer (6, 7) mit dem ersten Laderaum (4) verbindet.

13. Transportfahrzeug (1) nach einem der Ansprüche 10 bis 12, wobei der Kühlkammer-Trenner (12) der mindestens einen Kühlkammer (6, 7) in eine Vielzahl von Abschnitten (15.1, 15.2, 15.3, 15.4, 15.5, 15.6) für eine abschnittsweise Be- und/oder Entladung der Produkte unterteilt ist.

14. Transportfahrzeug (1) nach einem der Ansprüche 10 bis 13, weiter umfassend ein Türfreigabemittel zum Ermöglichen des Öffnens der ersten Innentür (10) nur dann, wenn die Fahrer- und Luftschleusenkabine (2) zur Umgebung geschlossen ist und/oder zum Ermöglichen des Öffnens des Kühlkammer-Trenners (12) nur dann, wenn die erste Innentür (10) geschlossen ist.

15. Transportfahrzeug (1) nach einem der Ansprüche 10 bis 14, weiter umfassend mindestens ein Sperr- und Schließmittel (22), durch das mindestens eine der folgenden Aktionen a) Schließen, b) Sperren, c) Entsperren und d) Öffnen an mindestens einer der Außentüren (8, 9) durchgeführt werden kann.

## Revendications

1. Procédé de distribution de produits à des clients finaux avec un véhicule de transport (1) et d'isolation thermique des produits de l'environnement, le véhicule de transport (1) comprenant au moins :
- une cabine à conducteur et à sas (2) comportant au moins une première porte externe (8) située d'un côté passager (19),
- un premier espace de cargaison (4), qui a une température étant contrôlée pour être dans une première plage de température, et qui est agencé adjacent à la cabine à conducteur et à sas (2), à laquelle il est relié par une première porte interne (10),
- un second espace de cargaison (5), qui a une température étant contrôlée pour être dans une deuxième plage de température, et qui est agencé adjacent au premier espace de cargaison (4), auquel il est relié par une seconde porte interne (11), dans lequel le second espace de cargaison (5) comprend une seconde porte externe (9), et
- au moins une chambre de refroidissement (6, 7) qui est située à l'intérieur du premier espace de cargaison (4) et qui comprend un séparateur de chambre de refroidissement (12),
dans lequel le procédé comprend au moins les étapes suivantes :
a) chargement des produits dans le véhicule de transport (1),
b) transport des produits avec le véhicule de transport (1) jusqu'à au moins l'un des clients finaux, et
c) déchargement des produits du véhicule de transport (1) qui sont désignés pour l'un des clients finaux respectifs,
dans lequel la cabine à conducteur et à sas (2) est utilisée en tant que sas entre le premier espace de cargaison (4) et l'environnement du véhicule de transport (1), et
dans lequel le premier espace de cargaison (4) est utilisé en tant que sas entre l'au moins une chambre de refroidissement (6, 7) et la cabine à conducteur et à sas (2).

2. Procédé selon la revendication 1, dans lequel la cabine à conducteur et à sas (2) a une température qui est contrôlée pour être dans une troisième plage de température.

3. Procédé selon l'une des revendications précédentes, comprenant en outre l'étape consistant à assurer que seule la première porte externe (8) ou la première porte interne (10) est ouverte en même temps pour assurer la fonctionnalité de la cabine à conducteur et à sas (2) en tant que sas entre le premier espace de cargaison (4) et l'environnement du véhicule de transport (1).

4. Procédé selon l'une des revendications précédentes, comprenant en outre l'étape consistant à assurer que seul la première porte interne (10) ou le séparateur de chambre de refroidissement (12) d'une ou plusieurs des au moins une chambre de refroidissement (6, 7) est/sont ouverts en même temps pour assurer la fonctionnalité du premier espace de cargaison (4) en tant que sas entre les au moins une chambre de refroidissement (6, 7) et la cabine à conducteur et à sas (2).

5. Procédé selon l'une des revendications précédentes, dans lequel la première plage de température est différente de la deuxième plage de température, et dans lequel les plages de température sont adaptées aux exigences de température des produits thermosensibles.

6. Procédé selon l'une des revendications précédentes, dans lequel au moins une partie des produits thermosensibles est stockée dans des boîtes de refroidissement (18) avec un refroidissement interne.

7. Procédé selon l'une des revendications précédentes, dans lequel au moins une partie des produits thermosensibles est stockée dans des boîtes de refroidissement (18), qui sont refroidies par une installation de refroidissement du véhicule de transport (1).

8. Procédé selon l'une des revendications précédentes, dans lequel au moins une porte externe (8, 9) est fermée automatiquement, lorsque la distance (20) entre un jeton de verrouillage (21) et le véhicule de transport (1) est augmentée au-dessus d'une valeur seuil prédéterminée.

9. Procédé selon l'une des revendications précédentes, dans lequel au moins une porte externe (8, 9) est automatiquement verrouillée, lorsque la distance (20) entre un jeton de verrouillage (21) et le véhicule de transport (1) est augmentée au-dessus d'une valeur seuil prédéterminée.

10. Véhicule de transport (1) pour distribuer des produits à des clients finaux et pour isoler thermiquement les produits de l'environnement en utilisant un procédé selon l'une des revendications précédentes, **caractérisé en ce que** le véhicule de transport (1) comprend :
- une cabine à conducteur et à sas (2) comportant au moins une première porte externe (8) située d'un côté passager (19),
- un premier espace de cargaison (4), qui a une température étant contrôlée pour être dans une première plage de température, et qui est agencé adjacent à la cabine à conducteur et à sas (2), à laquelle il est relié par une première porte interne (10),
- un second espace de cargaison (5), qui a une température étant contrôlée pour être dans une deuxième plage de température, et qui est agencé adjacent au premier espace de cargaison (4), auquel il est relié par une seconde porte interne (11), dans lequel le second espace de cargaison (5) comprend une seconde porte externe (9), et
- au moins une chambre de refroidissement (6, 7) qui est située à l'intérieur du premier espace de cargaison (4) et qui comprend un séparateur de chambre de refroidissement (12).

11. Véhicule de transport (1) selon la revendication 10, dans lequel l'au moins une chambre de refroidissement (6, 7) comprend un purgeur de condensat (14).

12. Véhicule de transport (1) selon l'une des revendications 10 à 11, dans lequel le séparateur de chambre de refroidissement (12) de l'au moins une chambre de refroidissement (6, 7) relie l'au moins une chambre de refroidissement (6, 7) au premier espace de cargaison (4).

13. Véhicule de transport (1) selon l'une des revendications 10 à 12, dans lequel le séparateur de chambre de refroidissement (12) de l'au moins une chambre de refroidissement (6, 7) est divisé en une multitude de sections (15.1, 15.2, 15.3, 15.4, 15.5, 15.6) pour un chargement et/ou un déchargement par section des produits.

14. Véhicule de transport (1) selon l'une des revendications 10 à 13, comprenant en outre un moyen de libération de porte pour permettre l'ouverture de la première porte interne (10) seulement si la cabine à conducteur et à sas (2) est fermée à l'environnement et/ou pour permettre l'ouverture du séparateur de chambre de refroidissement (12) seulement si la première porte interne (10) est fermée.

15. Véhicule de transport (1) selon l'une des revendications 10 à 14, comprenant en outre au moins un moyen de verrouillage et de fermeture (22) par lequel au moins l'une des actions suivantes : a) fermeture, b) verrouillage, c) déverrouillage et d) ouverture peut être effectuée sur au moins l'un des portes externes (8, 9).
